# EUROPEAN PATENT APPLICATION

(11) **EP 1 240 820 A1**
(43) Date of publication of application: **18.09.2002**
(21) Application number: 02076005.4
(22) Date of filing: 11.03.2002
(51) Int. Cl.: A01J 5/017, A01K 13/00

(54) **Milk robot provided with a disinfection tray**

(30) Priority: 11.03.2001 NL 1017561
(71) Applicant: Agrinowa B.V., 8411 XC Jubbega (NL)
(72) Inventor: van der Wal, Janko, 8412 SL Hoornsterzwaag (NL); Noordenburg, Albertus Johannes Maria, 8408 CH Lippenhuizen (NL)

(57) **Abstract**

The invention relates to a milk robot, provided with a milk room (1) into which a cow to be milked can be locked. According to the invention the short time during which the cow is locked in can be used for disinfecting the hind legs (9a,9b) of the cow. For that purpose the milk room (1) is provided with a tray (6), into which the hind legs (9a,9b) of the cow stand during the milking and into which a disinfection liquid is pumped during a short time.

## Description

The invention relates to a milk robot, provided with a milking room into which a cow to be milked can be locked in, a floor of which comprises a tray, in which at least the hind legs of the cow are forced into a straddle-legged position.

Milk robots as such are well known. The purpose of forcing a cow into a straddle-legged position is to make the udder more accessible to the milk robot. According to the inventive thought which forms the basis for the present invention, one may use the fact that a cow shows little interest for things passing around her while being milked and that accordingly it is very well possible to perform actions on her which would be difficult with a cow moving around freely. An action of this kind is the disinfection of the hind legs, and more in particular the hoofs of the hind legs of the cow. The hoofs of the hind legs are very susceptible for infections like Mortellaro, and when an infection rears its head in a shed, then it becomes necessary to disinfect daily the back hoofs of all animals during a number of weeks. Usually, this is performed by placing the hind legs of each cow in a tray filled with a disinfection liquid for some minutes or by making the cow wade through a tray, filled with a disinfection liquid. Both methods are problematic; the cow does not like it and will consequently oppose. This will involve additional labour.

The milk robot according to the invention obviates this problem in an exceptionally elegant manner and is characterized in that the milk robot is provided with means for filling the tray to a previously determined level during a previously determined time with a disinfection liquid while the cow is being milked.

A favourable embodiment of the inventive milk robot is characterized in that the tray is provided with a removable, V-shaped object for forcing the cow into the straddle-legged position. The V-shaped object minimises the chance that a cow will step out of the tray when the disinfection liquid flows in. As the V-shaped object is removable, the tray can be cleaned easily.

A further favourable embodiment, which provides for a simple level control, such that the hoofs will be immersed sufficiently deep and still a loss of disinfection liquid is prevented, is characterized in that under the V-shaped object a level detector is placed. An additional advantage is that the level detector is well protected and still remains accessible for service purposes.

A further favourable embodiment which can be realised easily is characterized in that the means comprise a storage tank for disinfection liquid and transportation means for the disinfection liquid. In this way, the disinfection in the milk robot can take place for a prolonged period of time without the need of human interference and if desired the disinfection liquid can be replaced without a need for switching off the milk robot.

A further favourable embodiment of the inventive milk robot is characterized in that the storage tank is provided with heating means and a thermostat. It is possible then to adjust the temperature of the disinfection liquid such that it is substantially equal to the temperature of the hind legs of the cows, as a result of which it will be hardly possible for a cow to notice the flow of disinfection liquid into the tray. Moreover, the effect of the disinfection liquid generally depends upon its temperature, which means that a more reproducible result may be obtained.

A further favourable embodiment of the inventive milk robot is characterized in that a bottom side of the storage tank is connected to the tray and that in a state of rest the level of the disinfection liquid in the storage tank is lower than the level of the tray. In this way it is prevented that disinfection liquid will flow in an uncontrolled manner towards the milk robot, which might harm the general hygienic state of the milk robot.

A very favourable embodiment according to a further aspect of the invention is characterized in that the storage tank is connected to a compressed-air supply via a control circuit. In this way, advantage is taken from the fact that for a milk robot compressed air is available, and that it can be used for transporting disinfection liquid to the tray. The control circuit is preferably arranged for supplying compressed air to the storage tank as soon as the cow produces milk, for blocking the compressed air as soon as the level detector detects a sufficiently high level and for draining the compressed air after a previously determined time.

The invention also relates to a disinfection arrangement, provided with a storage tank and a control circuit as described here, suitable to be added to an existing or new milk robot. As in fact only compressed air is needed, an integration of the inventive disinfection arrangement with an existing milk robot can be carried out easily.

The invention also relates to a method for disinfecting the hind legs of a cow with a disinfection liquid. A method of this kind is known as such, but it is also known that a cow doesn't much like to stand with its legs in a disinfection tray. The inventive method uses the fact that a cow shows little interest for things passing around her while being milked and is characterized in that de cow is made or permitted to walk into a milk robot, in the process of which both hind legs land in an empty tray, that once the cow is producing milk the tray is filled to a previously determined level with a disinfection liquid and that after a previously determined time the disinfection liquid is removed from the tray.

The invention will now be further explained with a reference to the following figures, in which:
- Fig. 1: schematically represents a possible embodiment of a milk robot according to the invention in top view;
- Fig. 2: schematically represents this embodiment in side view;
- Fig. 3A: schematically represents a possible embodiment of a disinfection tray in cross section;
- Fig. 3B: schematically represents a possible embodiment of a control circuit.

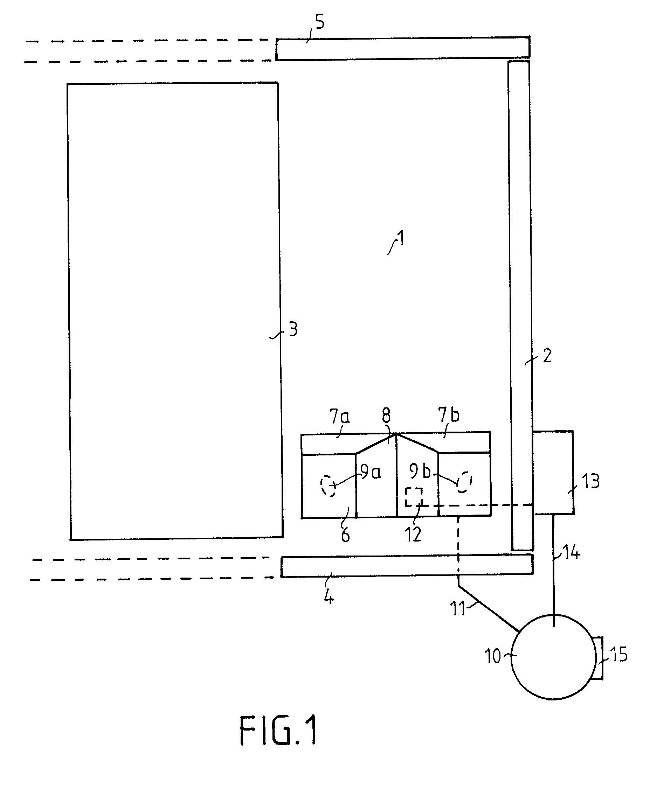

Fig. 1 schematically represents a possible embodiment of a milk robot according to the invention in top view, comprising a room 1 in which the cow stays during the milking. The room is formed by a fixed wall 2, the actual milk robot 3, a slidable entry door 4 and a slidable exit door 5. Initially, both doors 4 and 5 are open and a cow walks into room 1 in order to be milked. Almost instantaneously, both doors 4 and 5 close automatically, which results in the cow being positioned in a well-defined manner in room 1. In the floor of room 1 a tray 6 is made, precisely at the position where the cow must place its hind legs. The tray is provided with slanting front sides 7a,7b and in the middle a V-shaped object 8 is placed, which forces the hind legs 9a,9b of the cow in a straddle-legged position. An additional advantage of the slanted surfaces is that a cow cannot move its legs, even if she would. As soon as milk robot 3 detects that milk is flowing, or a predetermined time after the doors 4,5 have been closed, a disinfection liquid is passed from a storage tank 10 via a pipe 11 to tray 6, in such a manner that the hoofs of the hind legs of the cow are immersed. In order to determine the right height, a level switch 12 is placed underneath V-shaped object 8, which level switch is connected to a control cabinet 13 in which a control circuit is placed for controlling the liquid level. In the embodiment shown here, the level is controlled by compressed air, which can be supplied by control cabinet 13 to the top side of storage tank 10 via a pipe 14, as a result of which disinfection liquid will flow towards tray 6. Storage tank 10 may be provided with heating means 15 with an integrated thermostat and may be provided with an insulation layer, not shown, for giving the disinfection liquid a constant temperature.

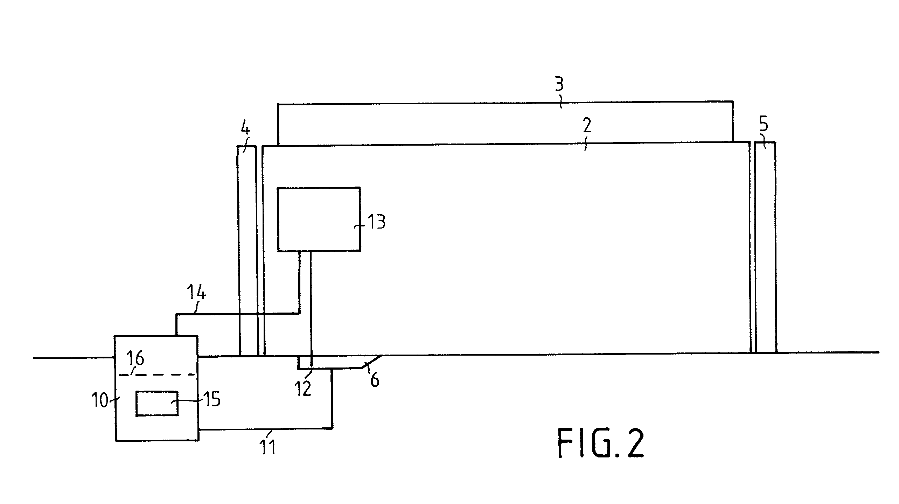

Fig. 2 schematically represents this embodiment in side view, with milk robot 3, wall 2 onto which control cabinet 13 is mounted and storage tank 10 with heating means 15, in which the level 16 of the disinfection liquid is chosen such that it remains just below the level of tray 6, and compressed air pipe 14 for forcing disinfection liquid via pipe 11 to tray 6. Finally, level switch 12 is schematically shown, which communicates to a control circuit in control cabinet 13 that a previously determined level of for example 8 centimetre has been reached.

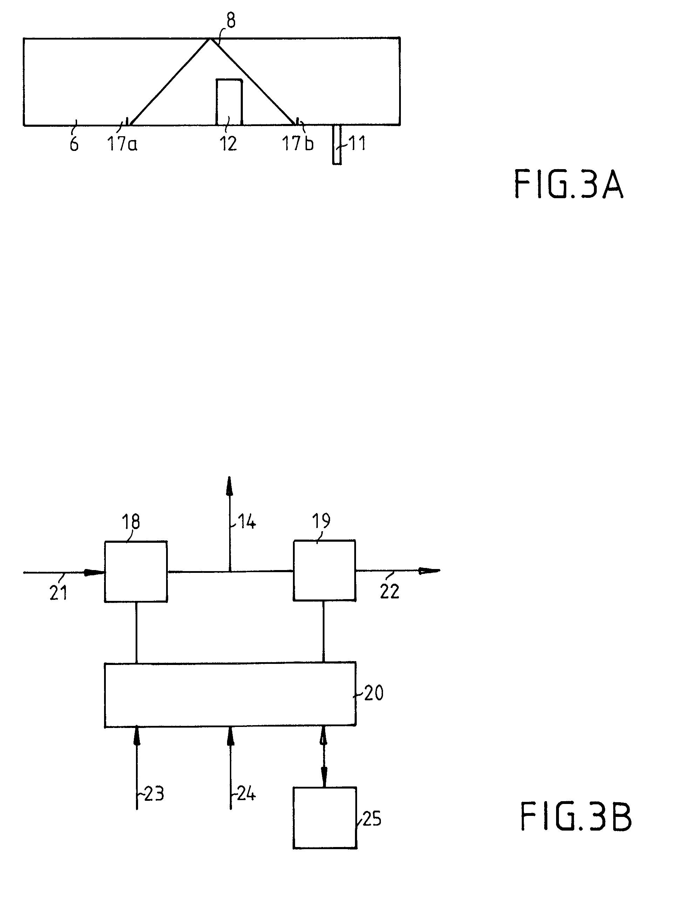

Fig. 3A schematically represents a possible embodiment of a disinfection tray 6 in cross section, provided with a removable V-shaped object 8 that is for example centred by two ribs 17a,17b and underneath which a level switch 12, as such known in the art, is placed.

Fig. 3B schematically represents a possible embodiment of a control circuit which is present in control cabinet 13, consisting of two electrically operated valves 18,19 and an electric circuit 20. Compressed air 21 is supplied to valve 18, with a pressure of for example 1.5 bar, while exit 22 of valve 19 may blow off air freely. Electric circuit 20, for example a PLC, receives a signal 23 form the actual milk robot, indicating that milk is flowing. Upon the reception of this signal, electric circuit 20 opens valve 18, compressed air will flow to storage tank 10 via pipe 14 and disinfection liquid will flow to tray 6. The switching of level switch 12 will be passed on to electric circuit 20 via a connection 24 and results in the closing of valve 18. A time switch 25 is connected to electric circuit 20, which passes a signal to electric circuit 20 after for example two minutes, upon which valve 19 is opened for a short time, which results in the draining away of air from storage tank 10 and the flowing away of disinfection liquid from tray 6.

## Claims

1. Milk robot, provided with a milking room into which a cow to be milked can be locked in, a floor of which comprises a tray, in which at least the hind legs of the cow are forced into a straddle-legged position, **characterized in that** the milk robot is provided with means for filling the tray to a previously determined level during a previously determined time with a disinfection liquid while the cow is being milked.

2. Milk robot according to claim 1, **characterized in that** the tray is provided with a removable, V-shaped object for forcing the cow into the straddle-legged position.

3. Milk robot according to claim 2, **characterized in that** under the V-shaped object a level detector is placed.

4. Milk robot according to claim 1, **characterized in that** the means comprise a storage tank for disinfection liquid and transportation means for the disinfection liquid.

5. Milk robot according to claim 4, **characterized in that** the storage tank is provided with heating means and a thermostat.

6. Milk robot according to claim 4 or 5, **characterized in that** a bottom side of the storage tank is connected to the tray and that in a state of rest the level of the disinfection liquid in the storage tank is lower than the level of the tray.

7. Milk robot according to claim 6, **characterized in that** the storage tank is connected to a compressed-air supply via a control circuit.

8. Milk robot according to claim 7, **characterized in that** the control circuit is arranged for supplying compressed air to the storage tank as soon as the cow produces milk, for blocking the compressed air as soon as the level detector detects a sufficiently high level and for draining the compressed air after a previously determined time.

9. Disinfection arrangement provided with a storage tank and a control circuit according to one of the previous claims, suitable to be used in combination with a milk robot.

10. Method for disinfecting the hind legs of a cow with a disinfection liquid, **characterized in that** de cow is made or permitted to walk into a milk robot, in the process of which both hind legs land in an empty tray, that once the cow is producing milk the tray is filled to a previously determined level with a disinfection liquid and that after a previously determined time the disinfection liquid is removed from the tray.
